# EUROPÄISCHE PATENTSCHRIFT

(11) **EP 1 058 797 B1**
(45) Veröffentlichungstag und Bekanntmachung des Hinweises auf die Patenterteilung: **17.07.2002**
(21) Anmeldenummer: 99907506.2
(22) Anmeldetag: 05.02.1999
(51) Int. Cl.: F16K 3/12

(54) **ABSPERRSCHIEBER**
GATE VALVE
ROBINET-VANNE

(30) Priorität: 05.03.1998 DE 19809335
(43) Veröffentlichungstag der Anmeldung: 13.12.2000
(73) Patentinhaber: KSB Aktiengesellschaft, 67227 Frankenthal (DE)
(72) Erfinder: ILLY, Alois, D-67117 Limburgerhof (DE)
(86) Internationale Anmeldenummer: EP9900769
(87) Internationale Veröffentlichungsnummer: WO9945301

(56) Entgegenhaltungen:
- DE-B- 1 023 645
- FR-A- 2 636 399

## Beschreibung

Die Erfindung betrifft einen Absperrschieber nach dem Oberbegriff des Anspruchs 1.

Durch die DE-B 10 23 645 ist ein gattungsbildender Absperrschieber mit großer Baulänge bekannt, dessen Bauhöhe durch die Verwendung einer Doppelgewindespindel erheblich reduziert wird. Die große Baulänge ist zwangsläufig bedingt durch den inneren Aufbau des Verschlußelementes und die dadurch notwendig werdenden zusätzlichen Versteifungen in Form von Verstrebungen, mit deren Hilfe diese Armatur den auf sie einwirkenden Belastungen standhalten kann.

Weitere Absperrschieber sind durch die DE-C-1 044 541 bekannt. Diese Keilschieber wurden gemäß einer heutzutage nicht mehr gebräuchlichen Norm hergestellt. Sie verfügen über eine Gehäuseform mit der es möglich ist, Rohrleitungsflansche zusammenhaltende Flanschschrauben beiderseits des Gehäusehalses vorbeizuführen. Diese Bauart ist jedoch begrenzt auf kleine Rohrleitungsnennweiten, deren Flansche ein 4-Loch Bohrbild besitzen. Bei größeren Nennweiten werden die Flansche mit einer größeren Anzahl von Schrauben zusammengehalten, wodurch diese aufgrund der gleichmäßigen Verteilung nicht mehr am Gehäusehals vorbeigeführt werden können. Um den Durchströmquerschnitt freizugeben, wird der Schieberkeil aus dem Gehäusesitz völlig herausgehoben. Demzufolge muß das Gehäuse einen langen Gehäusehals und somit eine große Bauhöhe aufweisen. Weiterhin verfügt der Gehäusehals über eine Teilung, durch die eine verschließbare Öffnung für die Montage oder Demontage des Schieberkeiles geschaffen wird. Üblicherweise dient ein Deckelteil zum Verschluß der Öffnung, der gleichzeitig die Lagerung und Abdichtung der Spindel gewährleistet.

Dadurch bedingt weist das durch den Innendruck und durch Rohrleitungskräfte belastete Gehäuse eine ungünstige Gestaltung auf. Der lange Gehäusehals in Verbindung mit dem angenähert rechteckigen, in anderen Ausgestaltungen auch flachovalem Querschnitt erlauben nur eine niedrige Druckbelastung. Der druckbelastete Innenraum des Gehäuses, die sogenannte Druckhülle, ist mehrteilig ausgebildet. Dies verursacht einen zusätzlichen Bauaufwand und weist eine zusätzliche Abdichtung mit der Gefahr von Leckagen nach außen auf.

Herkömmliche Schieber dieser Bauart mit kurzer Baulänge, die sogenannten Flachschieber, sind in ihrer Druckbelastbarkeit auf PN 10 im Nennweitenbereich bis DIN 200 begrenzt. Darüber nimmt die zulässige Druckbelastung weiter ab. Diese Werte gelten für den Gehäusewerkstoff Gußeisen mit Lamellengraphit mit einer Zugfestigkeit von ca. 250 N/mm².

Für höhere Drücke müssen andere Schieberbauformen, beispielsweise Ovalschieber oder Rundschieber, mit entsprechend höherem Bauaufwand und größerer Baulänge eingesetzt werden.

Durch die DE-A-25 06 951 ist ein Absperrschieber mit einteilig ausgebildetem Gehäuse bekannt, bei dem die Nachteile einer mehrteiligen Druckhülle vermieden sind. Das keilförmige Verschiußstück wird durch eine Anschlußöffnung in das Gehäuse eingesetzt und darin mit der Spindel verbunden. Um das Verschlußstück montieren zu können, weist das Gehäuse nur eine einzige Sitzfläche mit gegenüberliegend angeordneten Rampen auf und ist im Sitz um etwa zwei Nennweitenstufen gegenüber der Anschlußnennweite eingeschnürt. Diese Maßnahme ermöglicht das Einfädeln des Schieberkeiles in den als Führung dienenden Gehäusehals und auch die Anpressung an die Sitzfläche des Gehäuses. Die Verwendung von zwei Rampen soll eine sichere Abdichtung des Schieberkeiles auch bei hohen Drücken bewirken. Die Rampen weisen zueinander einen Abstand auf, der ein Hindurchschieben des Schieberkeiles ermöglicht und sind auf der Gehäuseseite angeordnet, durch dessen Stutzen das Verschlußelement in das Schiebergehäuse eingeführt wird.

Gegenüber den herkömmlichen Keilschiebern mit doppelter Sitzabdichtung hat dieser Schieber nur eine einfache Sitzabdichtung. Außerdem ist die spezifische Belastung der Rampen wegen der kleinen Rampenanlageflächen höher als die des Dichtsitzes, so daß sich ein höherer Verschleiß der Rampen ergibt. Da die Rampen nicht über den vollen Umfang sondern nur an zwei Stellen wirken, ist die spezifische Anpressung an der Dichtfläche nicht gleichmäßig, was zu höheren Betätigungskräften bzw. Leckagen führt. Auch ergibt die relativ starke Einschnürung einen hohen Widerstandsbeiwert. Herkömmliche Schieber haben entweder vollen Durchgang oder sind um bis zu eine Nennweitenstufe eingeschnürt. Bezüglich der Druckbelastbarkeit des Gehäuses ergeben sich bei dieser Konstruktion prinzipiell die gleichen Nachteile wie bei der Ausführung nach der DE-C-10 44 541.

Der Erfindung liegt die Aufgabe zugrunde, einen Schieber mit hoher zulässiger Druckbelastung bei gleichzeitig kurzer Baulänge, niedriger Bauhöhe und geringem Widerstandsbeiwert in kostengünstiger Art herzustellen.

Die Lösung dieses Problems sieht vor, daß der Durchströmquerschnitt des Gehäuses und die Absperrfläche des keilförmigen Verschlußstückes Ovale bilden und daß der ovale Durchstömquerschnitt im Gehäuse gegenüber den Anschlußöffnungen reduziert ist. Mit dieser Lösung ist es möglich, im Bereich der Gehäusedichtflächen einen Durchströmquerschnitt vorzusehen, der aufgrund seiner Ovalität nur geringe Strömungsverluste zur Folge hat gegenüber den Anschlußöffnungen der Rohrleitungen reduzierten. Die großen Achsen der Ovale können dabei Abmessungen aufweisen, die etwa gleich dem Durchmesser der Anschlußöffnungen des Gehäuses sind. Infolge der Verwendung eines keilförmigen Verschlußstückes, welches oval ausgebildet ist und mit seiner Längsachse quer zur Bewegungsrichtung verläuft, wird durch Reduzierung der Hubhöhe auch eine gravierende Reduzierung der Bauhöhe sichergestellt.

Eine Ausgestaltung der Erfindung sieht vor, daß die Hubhöhe des keilförmigen, ovalen Verschlußstückes innerhalb der von den Flanschschrauben umschriebenen Kontur verbleibt: Ein solcher Absperrschieber kann somit auch bei größeren Rohrleitungsnennweiten Anwendung finden, deren Flansche als 8-Lochflansche ausgebildet sind. Die Hubhöhe des keilförmigen Verschlußstückes mit seiner ovalen Form verbleibt damit innerhalb der von den Flanschschrauben umschriebenen Kontur. Im Bereich der Flanschschrauben kann daher ein Gehäusehals realisiert werden, der nur die Spindel aufzunehmen hat. Deshalb kann er so dünn ausgebildet werden, daß er zwischen zwei Flanschschrauben angeordnet werden kann. Dies ermöglicht den problemlosen Einsatz eines solchen Absperschiebers als Einklemmarmatur auch bei größeren Nennweiten bis etwa Nennweite 150.

Nach weiteren Ausgestaltungen der Erfindung ist das keilförmige Verschlußstück einoder mehrteilig oder auch elastisch nachgiebig ausgebildet. Mittels einer solchen Maßnahme ist eine leichtere Montage des Schieberkeiles möglich. Bei einem mehrteiligen Verschlußstück werden die Teile eines solchen Schieberkeiles einzeln in das Gehäuse eingefügt, darin in die richtige Lage gebracht und mit einer noch zu montierenden Antriebsspindel verbunden.

Auch kann das Gehäuse ein- oder mehrteilig ausgebildet sein, wobei bei einer mehrteiligen Ausbildung die Teilebene innerhalb und/oder außerhalb desjenigen Gehäuseteiles angeordnet ist, der die druckbelastete Druckhülle bildet. Eine solche Teilung würde eine Öffnung schaffen, durch die eine leichtere Montage der Ventilspindel und gegebenenfalls damit verbundener Abdichtelemente möglich ist. Die Öffnung als solche wird kleiner ausgebildet sein als eine Querschnittsform des keilförmigen Verschlußstückes, welches unverändert durch die Anschlußöffnungen des Gehäuses eingesetzt wird.

Dieses Gehäuse selbst kann als Einklemmgehäuse ausgebildet sein, aber ebensogut kann das Gehäuse mit Flanschen zum Anschluß von Rohrleitungen ausgestattet sein. Bei der Ausbildung als Einklemmgehäuse kann dieses als Ringgehäuse, mit Flanschaugen, mit Monoflansch oder mit Gewindeaugen versehen sein.

Ausführungsbeispiele der Erfindung sind in den Zeichnungen dargestellt und werden im folgenden näher beschrieben. Die
- Fig. 1: zeigt einen Querschnitt durch einen Absperrschieber, die
- Fig. 2 - 4: verschiedene Ausführungen als Flanschgehäuse und die
- Fig. 5 - 9: verschiedene Ausführungen als Einklemmgehäuse.

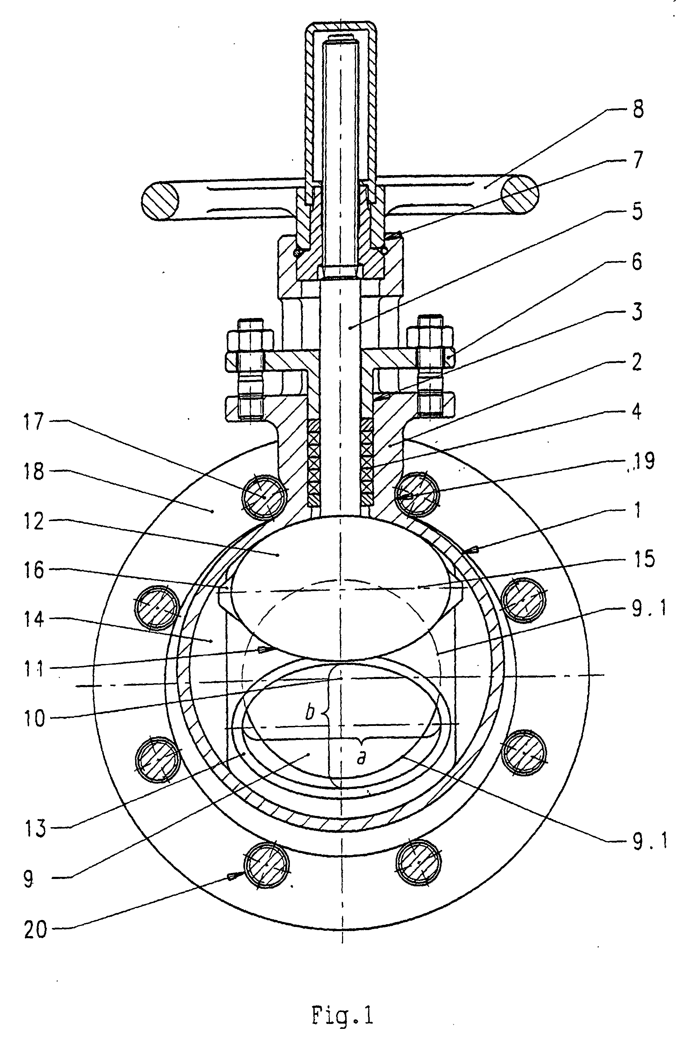

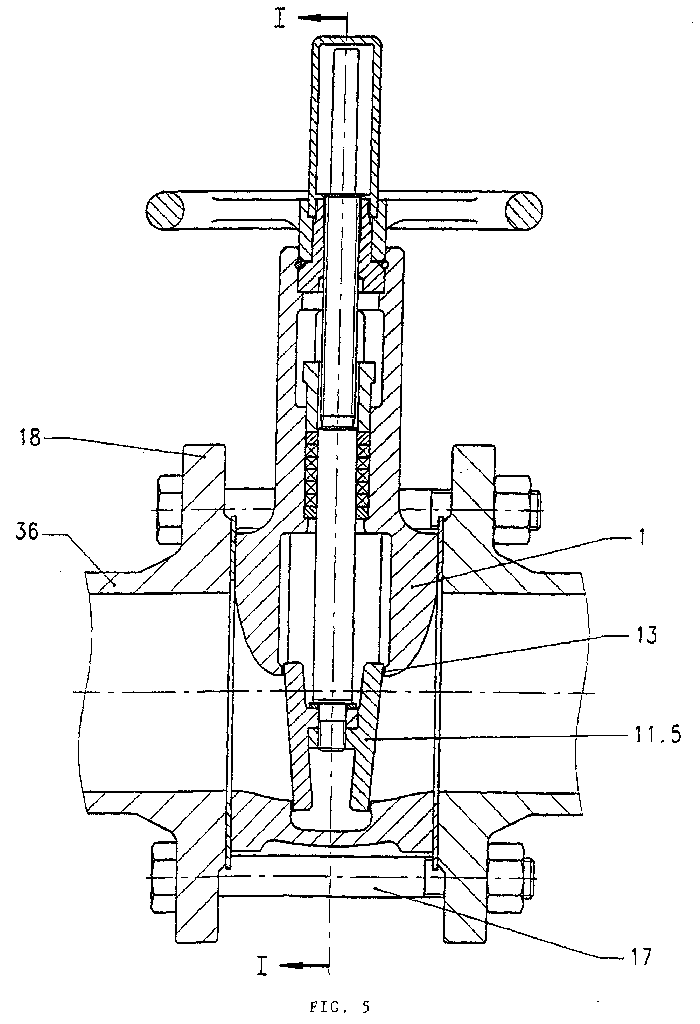

In der Fig. 1 ist ein quer zur Durchströmrichtung geschnittener Absperrschieber gezeigt, wobei der gezeigte Schnitt einem Schnitt gemäß Linie I-I aus Fig. 5 entspricht. Das Gehäuse 1 verfügt über einen Gehäusehals 2, in dessen Bohrung 3 eine Dichtung 4 mit einer davon abgedichteten Spindel 5 angeordnet ist. Die Dichtung 4 wird hierbei mittels einer Stopfbuchsbrille 6 dichtend angepreßt, wobei aber auch andere bekannte Dichtungsbauarten verwendet werden können. Im Gehäusehals 2 ist weiterhin ein Betätigungsmechanismus 7 vorgesehen, mit dessen Hilfe die Spindel 5 längsverschieblich bewegt werden kann. Die Drehbewegung wird durch ein Handrad 8 eingeleitet.

Das Gehäuse 1 weist einen ovalen Durchströmquerschnitt 9 auf, der hier gegenüber einer Rohrleitungsachse 10 nach unten versetzt angeordnet ist. Ein ebenfalls einen ovalen Querschnitt aufweisendes keilförmiges Verschlußstück 11, dessen Absperrfläche 12 größer als der ovale Durchströmquerschnitt 9 ausgebildet ist, liegt dichtend an ebenfalls oval ausgebildeten Gehäusedichtflächen 13 an. Die Anpressung an die beiderseits des Verschlußstückes 12 befindlichen Gehäusedichtflächen 13 erfolgt durch die Keilform. Innerhalb des Gehäuses 1 vorgesehene Führungen 14 wirken mit in Richtung der Längsachse 15 des Verschlußstückes 11 angeordneten Führungselementen 16 des Verschlußstückes 11 zusammen. Aufgrund der Ausbildung von Verschlußstück 11 und Durchströmquerschnitt 9 verfügt das Gehäuse 1 über Außenabmessungen, die dessen Anordnung zwischen Schraubbolzen 17 erlaubt, mit deren Hilfe Rohrleitungsflansche 18 gegen das Gehäuse 1 anpreßbar sind bzw. die zur Verbindung mit Rohrleitungsflanschen dienen. Zur leichteren Montage sind im Bereich des Gehäusehalses 2 auch zusätzliche Ausnehmungen 19 vorgesehen, die zum leichteren Hindurchführen der Schraubbolzen 17 durch Flanschbohrungen 20 dienen.

In der dargestellten Ausführung entspricht eine in Richtung der Längsachse 15 des Verschlußstückes 11 verlaufende große Achse a des ovalen Durchströmquerschnittes 9 etwa der Anschlußnennweite 9.1. Nur der Bereich der kleinen Achse b des ovalen Durchströmquerschnittes 9 ist gegenüber der Anschlußnennweite 9.1 um etwa zwei Nennweitenstufen eingeschnürt. Somit ergibt sich bezogen auf die Fläche des Durchströmquerschnittes 9 eine Einschnürung um nur eine Nennweitenstufe gegenüber der Anschlußnennweite 9.1. Die Einschnürung liegt somit im Bereich der herkömmlich ausgeführten Schieber mit niedrigen Widerstandsbeiwert.

Der Hub eines derartigen Schiebers, welcher dem Weg des Verschlußstückes 11 aus einer Schließstellung in eine Offenstellung oder umgekehrt entspricht, entspricht etwa der kleinen Achse b des durch die Achsen a und b bezeichneten Ovals. Da die kleine Achse b um zwei Nennweitenstufen eingeschnürt ist, ist auch der Hub um zwei Nennweitenstufen kleiner. So hat z. B. ein solcher Schieber mit einer Nennweite 80 einen Hub von etwa 50 mm. Im Vergleich mit einem herkömmlichen Schieber gleicher Nennweite mit außenliegendem Spindelgewinde läßt sich z. B. die Bauhöhe um ca. 150 - 200 mm reduzieren, was einer prozentualen Einsparung von ca. 40 % entspricht. Der Schieber baut im Vergleich wesentlich niedriger. Außerdem wirkt sich der geringe Hub auch günstig auf eine Spindelabdichtung mittels Faltenbalg aus, da der Faltenbalg verhältnismäßig kurz ausgebildet werden kann.

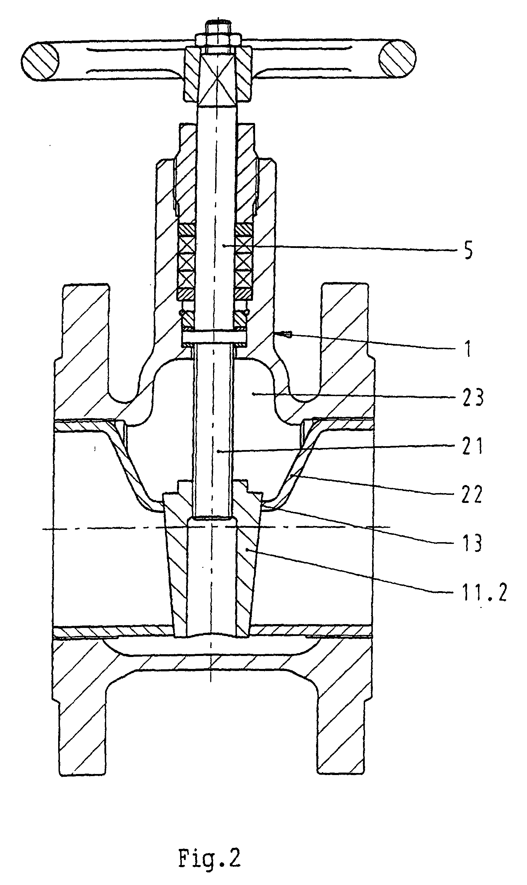

Die Fig. 2 bis 9 zeigen verschiedene Ausführungsformen, bei denen ein Schnitt in Richtung der Durchströmachse oder Rohrleitungsachse erfolgt. Hierbei sind die Ausführungsformen der Fig. 2 bis 4 als Flanschgehäuse dargestellt und in den Fig. 5 bis 9 sind Einklemmgehäuse gezeigt.

Die Fig. 2 zeigt ein einteiliges Gehäuse 1, in dem eine drehende nicht steigende Spindel 5 gelagert ist. Die Spindel 5 ist durch ein innenliegendes Gewinde 21 mit dem bevorzugt als Flexikeil ausgebildetem keilförmigen Verschlußstück 11.2 verbunden, welches sich infolge der eingeleiteten Drehbewegung auf dem Gewinde 21 in Längsrichtung bewegt. Das Gehäuse 1 verfügt hierbei über zwei das Verschlußstückes 11.2 zwischen sich einschließende einteilige Einsätze 22, die aus einem Material bestehen können, welches vom Gehäusematerial abweicht. Dies könnte beispielsweise auch ein Blechformteil sein, in dem die Gehäusedichtflächen 13 eingearbeitet sind. Die Einsätze 22 werden z. B. in dem Gehäuse 1 positioniert eingeschraubt und durch geeignete Mittel wie Kleber, Dichtmittel, Sicherungsstifte usw. abgedichtet und gesichert, wobei das Verschlußstück 11.2 vorher in das Gehäuse 1 eingebracht und mit der Spindel 5 bzw. dem Gewinde 21 verbunden wurde.

Der Schieberdom 23 des Gehäuses 1 ist im Vergleich zu herkömmlichen Lösungen sehr niedrig. Damit gewinnt das Gehäuse 1 an Stabilität und kann höhere Druckbelastungen aufnehmen.

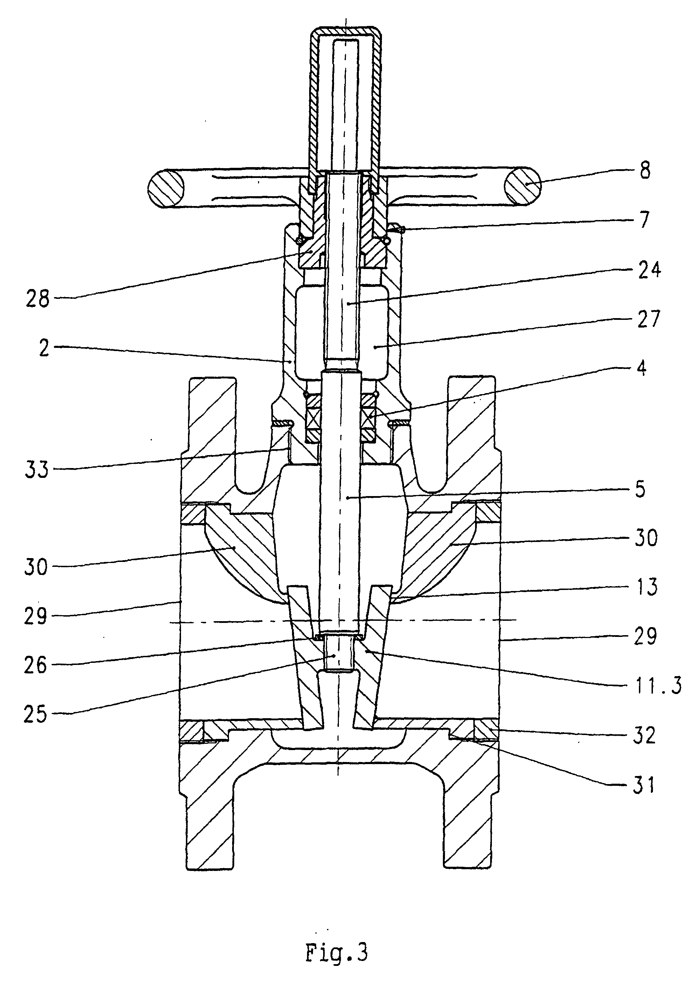

In der Ausführungsform der Fig. 3 ist eine nichtdrehende steigende Spindel 5 mit außenliegendem Spindelgewinde 24 gezeigt, wobei die Spindelabdichtung 4 mittels einer Dichtungspatrone erfolgt. Die Spindel 5 weist an ihrem im Gehäuse befindlichen Ende ein Verbindungselement 25 auf, hier ein kurzer Gewindezapfen, durch das sie mit einem einteiligen keilförmigen Verschlußstück 11.3 verbunden und durch ein Sicherungselement 26 gegen Verdrehen gesichert. Alternativ zu dieser Art der Verdrehsicherung können auch andere bekannte Lösungen wie z. B. ein -hier nicht dargestellter - Arretierkolben im Raum 27 des Gehäuses 1 oder eine Steckverbindung vorgesehen werden.

Der Gehäusehals 2 ist hier als ein separates, mittels einer Schraubverbindung 33 im Gehäuse 1 befestigtes Teil ausgebildet. Die dafür nötige Gehäuseöffnung dient als Montageerleichterung für die innerhalb des Gehäuses erfolgende Verbindung der Spindel 5 mit dem Verschlußstück 11.3. Je nach den zur Verfügung stehenden Fertigungseinrichtungen kann dies eine erhebliche Montageerleichterung bedeuten, da ein den Gehäusehals 2 aufweisendes Gehäuseoberteil als komplett vormontierte Einheit Verwendung finden kann.

Durch die Anschlußöffnungen 29 sind Einsätze 30 in das Gehäuse 1 eingesetzt und darin in Achsrichtung festgelegt. Die Festlegung kann mit Hilfe der hier gezeigten stufig ausgebildeten Absätze 31 erfolgen. Als Ringe ausgebildete Schraubelemente 32 dienen zur Festlegung der Einsätze 30, an deren oval ausgebildete Gehäusedichtflächen 13 das Verschlußstückes 11.3 dichtend anliegt.

Je nach Ausführungsart der Verschlußstücke können damit zusammenwirkende Gehäusedichtflächen bearbeitet oder unbearbeitet ausgebildet sein.

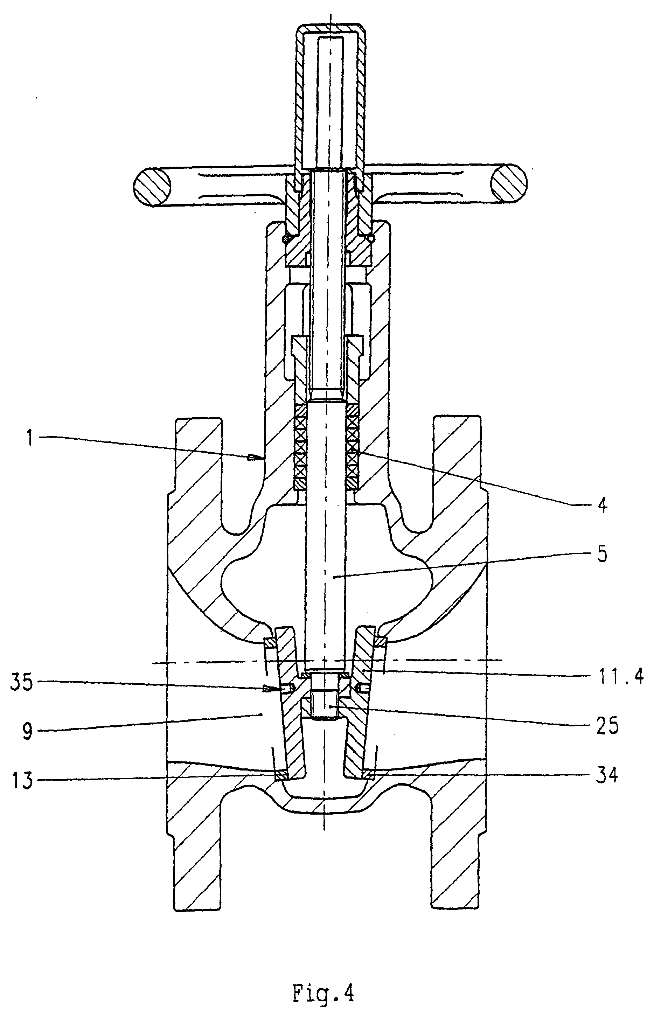

Die Fig. 4 unterscheidet sich gegenüber der Fig. 3 durch eine Abdichtung 4 gemäß Fig. 1. Das Gehäuse 1 ist hier auch einteilig ausgeführt, wobei im Gehäuse 1 befestigte ovale Sitzringe 34 die Gehäusedichtflächen 13 bilden. Das dargestellte keilförmige Verschlußstück 11.4 ist zweiteilig ausgebildet, wobei beide Einzelteile getrennt durch den ovalen Durchströmquerschnitt 9 in das Gehäuse 1 eingeführt und durch das Verbindungselement 25 - hier ebenfalls ein Gewindezapfen - der Spindel 5 zusammengehalten werden. Das Einbringen der Verschlußstückteile in das Gehäuse 1 ist möglich, da sowohl die Durchströmquerschnitte 9 als auch die Außenkontur der beiden Teile des Verschlußstückes 11.4 oval gestaltet sind. Damit können die Teile in entsprechender Lage eingeführt und durch Verdrehung in die entgültige Montageposition gebracht werden. In den Teilen des Verschlußstückes 11.4 angebrachte Montagehilfen 35 erleichtern die Handhabung.

Die Fig. 5 unterscheidet sich zur Ausführungsform der Fig. 4 durch ein Gehäuse 1 in Einklemmbauart. Dieses kann in einfachster Weise zwischen die Flansche 18 von anzuschließenden Rohrleitungen 36 geklemmt werden. Die notwendigen Anpreßkräfte erzeugen die Flanschschrauben 17. Im Unterschied zur Ausführungsform der Fig. 4 sind die mit einem mehrteiligen Verschlußstück 11.5 zusammenwirkenden ovalen Gehäusedichtflächen 13 stoffschlüssige Bestandteile des Gehäuses. Sie werden in bekannter Weise z. B. durch Aufschweißen, Aufspritzen usw. hergestellt.

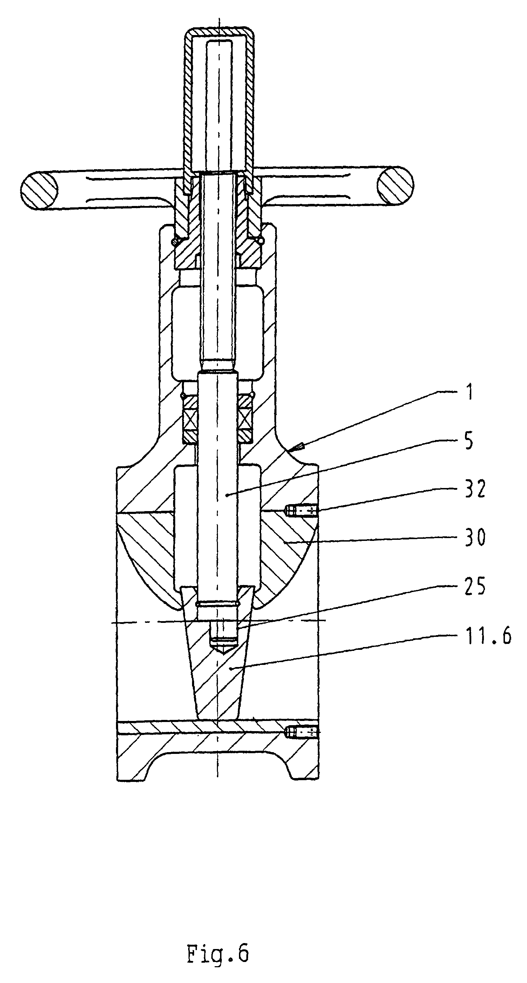

Die Fig. 6 entspricht im wesentlichen vom Aufbau des Gehäuses her der Ausführungsform gemäß Fig. 3, wobei auch hier das Gehäuse 1 als einteiliges Einklemmgehäuse ausgebildet ist. In das Gehäuse 1 ist ein einteiliger Einsatz 30 dichtend eingeschoben, der durch Schraubelemente 32 oder andere geeignete Mittel in seiner Position gehalten wird. Das gezeigte Verschlußstück 11.6 wird vor der Montage in den Einsatz 30 eingelegt und zusammen mit dem Einsatz 30 in das Gehäuse 1 eingeführt. Mit Hilfe einer hier als exzentrische Steckwelle ausgebildeten Verbindung 25 kann die Spindel 5 beim erstmaligen Betätigen rastend in das Verschlußstück 11.6 hineingedrückt werden. Diese Ausführung wird bevorzugt bei einer weichdichtenden Sitzabdichtung angewandt, wobei die Weichdichtung sowohl im Gehäuse als auch am Verschlußstück angeordnet sein kann.

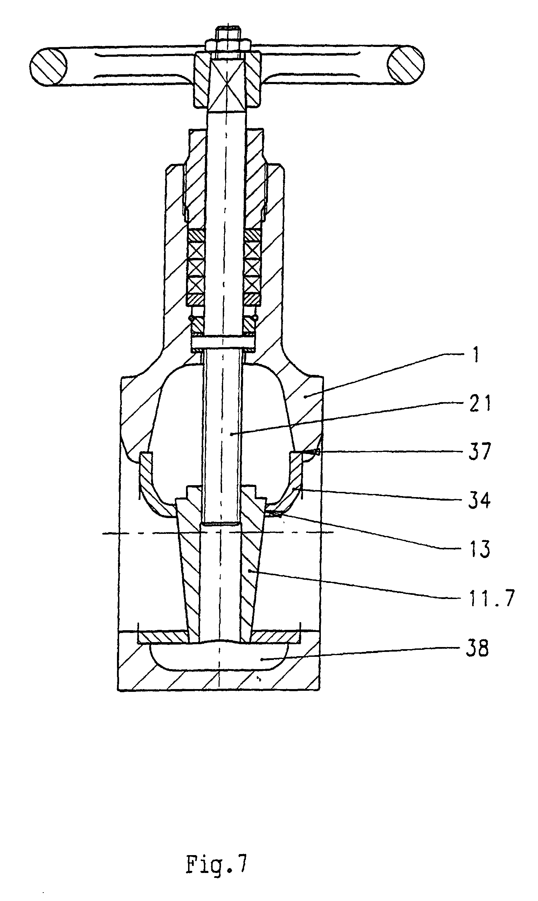

Fig. 7 zeigt eine Ausführung mit innenliegendem Spindelgewinde 21 ähnlich Fig. 2, jedoch mit einem Gehäuse in Einklemmausführung. Die Sitzringe 34 besitzen sowohl im Bereich der Gehäusedichtfläche 13 als auch im Bereich der Befestigung 37 im Gehäuse 1 eine ovale Form. Die Sitzringe 34 werden nach dem Einbringen des Verschlußstückes 11.7 in das Gehäuse 1 eingeführt und in diesem durch Einpressen, Einkleben usw. dichtend befestigt. Das Einbringen der Sitzringe 34 erfolgt in prinzipiell gleicher Weise wie das Einbringen der beiden Teile des Verschlußstückes 11.4 gemäß Fig. 4. Dazu wird der Raum 38 des Gehäuses 1 so gestaltet, daß die Sitzringe 34 zunächst mit ihrer langen Achse in den Raum 38 eintauchen und danach um etwa 90 ° in die richtige Position gedreht und befestigt werden.

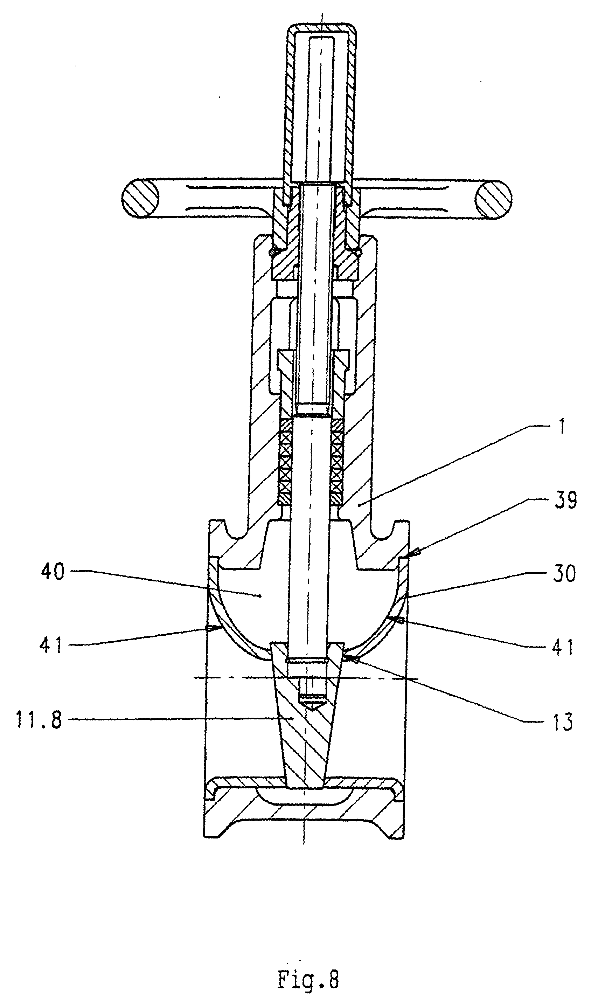

Fig. 8 zeigt eine Einklemmausführung mit besonders strömungsgünstig gestalteten Einsätzen 30. Die Einsätze 30 haben im Bereich der Befestigung 39 eine kreisförmige Außenkontur und können somit auf einfache Weise in das Gehäuse 1 positioniert eingebracht und mit diesem z. B. durch ein verzugsfreies Schweißverfahren verbunden werden.

Durch die dünnwandige Gestaltung und die Form der Einsätze 30 wirken diese gleichzeitig als Gehäusesicherung. Bei einem zu hohen Innendruck im Raum 40 bei geschlossenem Verschlußstück 11.8 werden die Einsätze 30, insbesondere in den Bereichen 41, verformt. Ein im Raum 40 eingeschlossenes Medium kann somit bei verformtem Einsatz 40 über die Dichtflächen 13 in das Rohrleitungssystem entweichen. Ein Bersten der Armatur unter Temperatureinfluß wird somit verhindert.

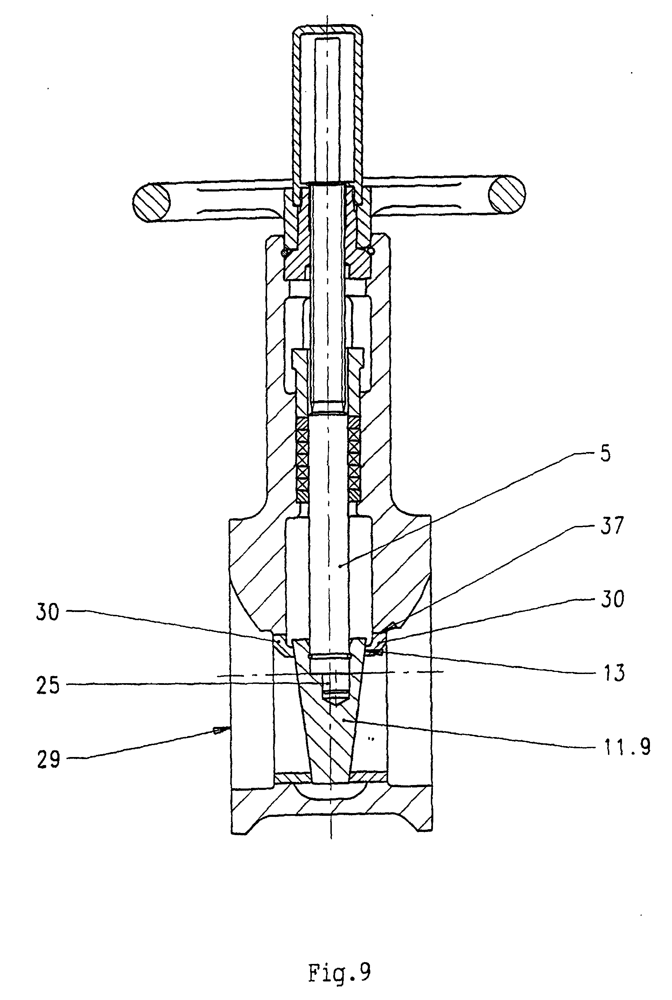

In der Fig. 9 sind die Einsätze 30 im Materialaufwand gegenüber Fig. 8 minimiert. Ihre Außenkontur ist im Bereich der Befestigung 37 oval ausgebildet und nur geringfügig größer als das Verschlußstück 11.9, so daß dieses auf einfache Weise in das Gehäuse 1 eingeführt und mit der Spindel 5 verbunden werden kann. Die Einsätze 30 werden anschließend eingeführt und in gleicher Weise wie in Fig. 8 beschrieben mit dem Gehäuse 1 verbunden.

Die Anschlußöffnungen 29 entsprechen in den jeweiligen Figuren mit ihrem Durchmesser in etwa der in Fig. 1 dargestellten Anschlußnennweite 9.1.

## Patentansprüche

1. Absperrschieber, in dessen Gehäuse (1) ein keilförmiges Verschlußstück (11) geführt ist und in einem Gehäusesitz (13) dichtend anliegt, das Gehäuse (1) mit Anschlußöffnungen (9.1, 29) zur Verbindung mit Rohrleitungen (36) ausgestattet ist und innerhalb des Gehäuses (1) im Bereich des Gehäusesitzes (13) ein gegenüber den Anschlußöffnungen (9.1, 29) exzentrisch versetzter Durchströmquerschnitt angeordnet ist, der Durchströmquerschnitt (9) des Gehäuses (1) und mindestens eine Absperrfläche (12) des keilförmigen Verschlußstückes durch zwei unterschiedlich lange Achsen definiert ist, wobei die Längsachsen (a, 15) quer zur Bewegungsrichtung des keilförmigen Verschlußstückes (11, 11.2 - 11.9) angeordnet sind und daß eine Spindel das keilförmige Verschlußstück bewegt, **dadurch gekennzeichnet, daß** der Durchströmquerschnitt (9) des Gehäuses (1) und die Absperrfläche (12) des keilförmigen Verschlußstückes Ovale bilden und daß der ovale Durchströmquerschnitt (9) im Gehäuse (1) gegenüber dem Querschnitt der Anschlußöffnungen (9.1, 29) reduziert ist.

2. Absperrschieber nach Anspruch 1, **dadurch gekennzeichnet, daß** die Hubhöhe des keilförmigen, ovalen Verschlußstückes (11, 11.2 - 11.9) innerhalb der von den Flanschschrauben (20) umschriebenen Kontur verbleibt.

3. Absperrschieber nach Anspruch 1 oder 2, **dadurch gekennzeichnet, daß** durch eine Anschlußöffnung (9.1, 29) das keilförmige Verschlußstück (11, 11.2 - 11.9) in das Gehäuse (1) eingesetzt und darin mit der Schieberspindel (5) verbunden ist.

4. Absperrschieber nach Anspruch 1, 2 oder 3, **dadurch gekennzeichnet, daß** das keilförmige Verschlußstück (11, 11.2 - 11.9) ein- oder mehrteilig ausgebildet ist.

5. Absperrschieber nach einem der Ansprüche 1 bis 4, **dadurch gekennzeichnet, daß** das keilförmige Verschlußstück (11, 11.2- 11.9) elastisch nachgiebig ausgebildet ist.

6. Absperrschieber nach Anspruch 4, **dadurch gekennzeichnet, daß** das mehrteilige, keilförmige Verschlußstück (11.4, 11.5) in Einzelteilen in das Gehäuse (1) eingesetzt und darin zusammengesetzt ist.

7. Absperrschieber nach einen.der Ansprüche 1- 6, **dadurch gekennzeichnet, daß** das Gehäuse (1) einteilig ausgebildet ist.

8. Absperrschieber nach einem der Ansprüche 1 bis 6, **dadurch gekennzeichnet, daß** das Gehäuse (1) mehrteilig ausgebildet ist und die Teilebene innerhalb und/oder außerhalb einer Druckhülle angeordnet ist.

9. Absperrschieber nach einem der Ansprüche 1 bis 8, **dadurch gekennzeichnet, daß** das Gehäuse (1) als Einklemmgehäuse ausgebildet ist.

10. Absperrschieber nach Anspruch 9, **dadurch gekennzeichnet, daß** das Einklemmgehäuse als Ringgehäuse, mit Flanschaugen, mit Monoflansch oder mit Gewindeaugen versehen ist.

11. Absperrschieber nach einem der Ansprüche 1 bis 10, **dadurch gekennzeichnet, daß** in Offenstellung das keilförmige Verschlußstück (11, 11.2 - 11.9) in den Durchströmquerschnitt (9) hineinragt.

12. Absperrschieber nach einem oder mehreren der Ansprüche 1 bis 11, **dadurch gekennzeichnet, daß** die kleine Achse (b) des Ovals etwa um zwei Nennweitenstufen eingeschnürt ist und die große Achse (a) etwa der Anschlußnennweite (9.1) entspricht.

## Claims

1. Shut-off valve which has a wedge-shaped closure element (11) guided in its housing (1) and butting with sealing action against a housing seat (13), the housing (1) is provided with connection openings (9.1, 29) for connection to pipelines (36) and provided within the housing (1), in the region of the housing seat (13), is a throughflow cross section which is offset eccentrically in relation to the connection openings (9.1, 29), the through-flow cross section (9) of the housing (1) and at least one shut-off surface (12) of the wedge-shaped closure element are defined by two axes of different lengths, it being the case that the longitudinal axes (a, 15) are arranged transversely to the movement direction of the wedge-shaped closure element (11, 11.2 - 11.9), and a spindle moves the wedge-shaped closure element, **characterized in that** the throughflow cross section (9) of the housing (1) and the shut-off surface (12) of the wedge-shaped closure element form ovals, and **in that** the oval throughflow cross section (9) in the housing (1) is reduced in relation to the cross section of the connection openings (9.1, 29).

2. Shut-off valve according to Claim 1, **characterized in that** the displacement height of the wedge-shaped, oval closure element (11, 11.2 - 11.9) remains within the contour circumscribed by the flange screws (20).

3. Shut-off valve according to Claim 1 or 2, **characterized in that**, through a connection opening (9.1, 29), the wedge-shaped closure element (11, 11.2 - 11.9) is inserted into the housing (1) and connected therein to the valve spindle (5).

4. Shut-off valve according to Claim 1, 2 or 3, **characterized in that** the wedge-shaped closure element (11, 11.2 - 11.9) is designed in one or more parts.

5. Shut-off valve according to one of Claims 1 to 4, **characterized in that** the wedge-shaped closure element (11, 11.2 - 11.9) is of elastically compliant design.

6. Shut-off valve according to Claim 4, **characterized in that** the multi-part, wedge-shaped closure element (11.4, 11.5) is inserted into the housing (1) in individual parts and assembled therein.

7. Shut-off valve according to one of Claims 1-6, **characterized in that** the housing (1) is designed in one part.

8. Shut-off valve according to one of Claims 1 to 6, **characterized in that** the housing (1) is designed in more than one part, and the separating plane is arranged inside and/or outside a pressure casing.

9. Shut-off valve according to one of Claims 1 to 8, **characterized in that** the housing (1) is designed as a clamp-in housing.

10. Shut-off valve according to Claim 9, **characterized in that** the clamp-in housing, as an annular housing, is provided with flange eyelets, with a monoflange or with threaded eyelets.

11. Shut-off valve according to one of Claims 1 to 10, **characterized in that**, in the open position, the wedge-shaped closure element (11, 11.2 - 11.9) projects into the throughflow cross section (9).

12. Shut-off valve according to one or more of Claims 1 to 11, **characterized in that** the minor axis (b) of the oval is constricted approximately by two nominal width steps and the major axis (a) corresponds approximately to the nominal width of the connection (9.1).

## Revendications

1. Vanne à tiroir dans le boîtier (1) de laquelle est guidée une pièce d'obturation (11) en forme de clavette qui repose de manière étanche dans un siège (13) du boîtier, le boîtier (1) étant muni d'ouvertures de raccordement (9.1, 29) pour la connexion à des conduits (36) et à l'intérieur du boîtier (1), une section transversale d'écoulement décalée de manière excentrique par rapport aux ouvertures de raccordement (9.1, 29) étant disposée dans la région du siège (13) du boîtier, la section transversale d'écoulement (9) du boîtier (1) et au moins une surface d'arrêt (12) de la pièce d'obturation en forme de clavette étant définies par deux axes de longueur différente, les axes longitudinaux (a, 15) étant disposés transversalement à la direction de mouvement de la pièce d'obturation (11, 11.2 - 11.9) en forme de clavette et une broche déplaçant la pièce d'obturation en forme de clavette, **caractérisée en ce que** la section transversale d'écoulement (9) du boîtier (1) et la surface d'arrêt (12) de la pièce d'obturation en forme de clavette forment des ovales et **en ce que** la section transversale d'écoulement ovale (9) dans le boîtier (1) est réduite par rapport à la section transversale des ouvertures de raccordement (9.1, 29).

2. Vanne à tiroir selon la revendication 1, **caractérisée en ce que** la hauteur de course de la pièce d'obturation ovale (11, 11.2 - 11.9) en forme de clavette reste incluse dans le contour défini par les vis de la bride (20).

3. Vanne à tiroir selon la revendication 1 ou 2, **caractérisée en ce que** la pièce d'obturation (11, 11.2 - 11.9) en forme de clavette est insérée dans le boîtier (1) par une ouverture de raccordement (9.1, 29) et est connectée dans celui-ci à la broche (5) du tiroir.

4. Vanne à tiroir selon la revendication 1, 2 ou 3, **caractérisée en ce que** la pièce d'obturation (11, 11.2 - 11.9) en forme de clavette est réalisée en une seule ou en plusieurs pièces.

5. Vanne à tiroir selon l'une quelconque des revendications 1 à 4, **caractérisée en ce que** la pièce d'obturation (11, 11.2 - 11.9) en forme de clavette est réalisée de manière flexible élastiquement.

6. Vanne à tiroir selon la revendication 4, **caractérisée en ce que** la pièce d'obturation (11.4, 11.5) en plusieurs parties, en forme de clavette, est insérée par ses parties individuelles dans le boîtier (1) et est assemblée dans celui-ci.

7. Vanne à tiroir selon l'une quelconque des revendications 1 à 6, **caractérisée en ce que** le boîtier (1) est réalisé d'une seule pièce.

8. Vanne à tiroir selon l'une quelconque des revendications 1 à 6, **caractérisée en ce que** le boîtier (1) est réalisé en plusieurs parties et le plan de séparation est disposé à l'intérieur et/ou à l'extérieur d'une enveloppe de pression.

9. Vanne à tiroir selon l'une quelconque des revendications 1 à 8, **caractérisée en ce que** le boîtier (1) est réalisé en tant que boîtier de serrage.

10. Vanne à tiroir selon la revendication 9, **caractérisée en ce que** le boîtier de serrage en tant que boîtier annulaire est pourvu d'oeillets de bride, d'une bride unique, ou d'oeillets filetés.

11. Vanne à tiroir selon l'une quelconque des revendications 1 à 10, **caractérisée en ce que** la pièce d'obturation (11, 11.2 - 11.9) en forme de clavette fait saillie dans la section transversale d'écoulement (9) dans la position ouverte.

12. Vanne à tiroir selon l'une quelconque ou plusieurs des revendications 1 à 11, **caractérisée en ce que** le petit axe (b) de l'ovale est quelque peu rétréci de deux degrés de section nominale de passage et le grand axe (a) correspond approximativement à la section nominale de raccordement (9.1).
